# EUROPEAN PATENT SPECIFICATION

(11) **EP 4 632 317 B1**
(45) Date of publication and mention of the grant of the patent: **12.08.2026**
(21) Application number: 23899274.7
(22) Date of filing: 03.04.2023
(51) Int. Cl.: G01B 11/02

(54) **DISPLACEMENT MEASUREMENT DEVICE AND MANUFACTURING METHOD THEREFOR**
VERSCHIEBUNGSMESSVORRICHTUNG UND HERSTELLUNGSVERFAHREN DAFÜR
DISPOSITIF DE MESURE DE DÉPLACEMENT ET SON PROCÉDÉ DE FABRICATION

(30) Priority: 05.12.2022 CN 202211545084
(43) Date of publication of application: 15.10.2025
(73) Proprietor: Shanghai Baiantek Sensing Technology Co., Ltd., Shanghai 201210 (CN)
(72) Inventor: ZHONG, Shaolong, Shanghai 201201 (CN); LIU, Changxia, Shanghai 201201 (CN); LONG, Liang, Shanghai 201201 (CN); LING, Jingfang, Shanghai 201201 (CN); GUO, Zhihui, Shanghai 201201 (CN); ZHOU, Zuoxing, Shanghai 201201 (CN)
(74) Representative: Elzaburu S.L.P.
(86) International application number: PCT/CN2023/086034
(87) International publication number: WO 2024/119680

(56) References cited:
- EP-A1- 3 101 385
- EP-A1- 3 173 752
- EP-B1- 3 696 494
- CN-A- 102 901 840
- CN-A- 107 388 982
- CN-A- 107 917 680
- CN-A- 109 506 766
- CN-A- 115 560 682
- CN-U- 215 984 960
- JP-A- 2009 133 693
- JP-A- H0 973 020
- US-A1- 2002 079 432
- PIERCE D S ET AL: "A NOVEL LASER TRIANGULATION TECHNIQUE FOR HIGH PRECISION DISTANCE MEASUREMENT", PROCEEDINGS OF THE INDUSTRY APPLICATIONS SOCIETY ANNUAL MEETING. HOUSTON, OCT. 4 - 9, 1992; [PROCEEDINGS OF THE INDUSTRY APPLICATIONS SOCIETY ANNUAL MEETING], NEW YORK, IEEE, US, vol. 2, 1 January 1992 (1992-01-01), pages 1762 - 1769, XP000334204, ISBN: 978-0-7803-0635-6, DOI: 10.1109/IAS.1992.244524

## Description

### TECHNICAL FIELD

The present disclosure relates to the technical field of displacement measurement, in particular to a displacement measuring apparatus and a manufacturing method thereof.

### BACKGROUND

Displacement measurement technology has been widely applied to various fields such as industry, military, aviation navigation, and communication. The optical detection apparatus (such as laser interferometers, photoelectric autocollimators, etc.) in the prior art have complex system structures and large volumes, and are difficult in measuring small displacements, or are insensitive to the variation of the small displacements. Moreover, the above instruments have high requirements on measurement environments, making them challenging to be applied to the field of industrial high-precision online measurements, especially in the fields of wind turbine blade load monitoring, monitoring of small displacements in loosening of wind turbine blade flanges, and bolt loosening monitoring. Therefore, it is necessary to design a displacement measuring apparatus that can measure small displacements, has high sensitivity, and can be applied to various complex environments. A relevant prior art document is PIERCE D S ET AL: "A NOVEL LASER TRIANGULATION TECHNIQUE FOR HIGH PRECISION DISTANCE MEASUREMENT", PROCEEDINGS OF THE INDUSTRY APPLICATIONS SOCIETY ANNUAL MEETING. HOUSTON, OCT. 4 - 9, 1992.

### SUMMARY

To solve at least one of various problems in the prior art, the present disclosure provides a displacement measuring apparatus and a manufacturing method thereof.

According to a first aspect of embodiments of the present disclosure, a displacement measuring apparatus is provided, which includes: a left fixing support and a right fixing support, wherein the left fixing support and the right fixing support are mounted on a surface of a to-be-measured target object, and a support beam arranged between the left fixing support and the right fixing support;
the support beam includes a left support beam, a right support beam, and a top support beam arranged between the left support beam and the right support beam;
a cantilever beam is arranged on the left support beam, and a blazed grating chip is arranged at an end of the cantilever beam that is away from the left support beam; and
a collimation unit is arranged below the top support beam, a light incident side of the collimation unit receives a light source signal, and a light emergent side of the collimation unit is used for outputting the light source signal to the blazed grating chip.

In an optional embodiment, an optical fiber is connected to the light incident side of the collimation unit, and the light source signal is transmitted to the light incident side of the collimation unit through the optical fiber.

In an optional embodiment, the optical fiber is a gold-coated or polyimide-coated optical fiber, one end of the optical fiber that is away from the collimation unit passes through the right support beam, and a gap between the optical fiber and the right support beam is sealed by welding.

In an optional embodiment, the left fixing support and the right fixing support are mounted on the surface of the to-be-measured target object by adhesion or welding.

In an optional embodiment, the blazed grating chip is an MEMS (Micro Electro Mechanical System)-process-manufactured chip, and a plurality of micro-mirrors are arranged on the blazed grating chip; and the light source signal, after passing through the collimation unit, is projected onto the micro-mirrors, and after selective reflection of the incident light based on wavelength by the micro-mirrors, the reflected light then re-enters the collimation unit and is collected by a signal receiving module.

In an optional embodiment, the left support beam is arranged on the left fixing support, the right support beam is arranged on the right fixing support, and a sensitivity-enhancing structure is arranged at a junction of the left support beam and the left fixing support, and/or a sensitivity-enhancing structure is arranged at a junction of the right support beam and the right fixing support.

In an optional embodiment, a sensitivity-enhancing structure is arranged at a junction of the top support beam and the left support beam, and/or a sensitivity-enhancing structure is arranged at a junction of the top support beam and the right support beam.

In an optional embodiment, a detachable protection beam is further arranged between the left fixing support and the right fixing support, and the detachable protection beam is used for protecting the displacement measuring apparatus against deformation in an assembled state.

In an optional embodiment, the collimation unit is arranged on the top support beam via a fixing unit, and the fixing unit is used for adjusting an orientation and/or a position of the collimation unit.

In an optional embodiment, the collimation unit and the fixing unit are coated with gold, and the collimation unit and the fixing unit are connected by welding.

In an optional embodiment, a limiting portion is arranged at one side of the end of the cantilever beam, and the limiting portion is used for positioning a mounting position of the blazed grating chip.

In an optional embodiment, the displacement measuring apparatus further includes a sealing unit, one end of the sealing unit is connected with the cantilever beam, while the other end of the sealing unit is connected with the collimation unit, such that a sealing channel is formed between the cantilever beam and the collimation unit.

In an optional embodiment, a housing is arranged outside the displacement measuring apparatus, and the housing seals the elements inside the displacement measuring apparatus.

According to a second aspect of embodiments of the present disclosure, a manufacturing method of the displacement measuring apparatus in the first aspect is provided. The method includes the following steps:
fixing a support beam between a left fixing support and a right fixing support; and
allowing two ends of a protection beam to be detachably connected to the left fixing support and the right fixing support respectively via fixing elements.

In an optional embodiment, a sensitivity-enhancing structure is processed at a junction of a left support beam and the left fixing support, and/or a sensitivity-enhancing structure is processed at a junction of a right support beam and the right fixing support, and/or a sensitivity-enhancing structure is processed at a junction of a top support beam and the left support beam, and/or a sensitivity-enhancing structure is processed at a junction of the top support beam and the right support beam.

In an optional embodiment, a cantilever beam is mounted on the left support beam, a limiting portion is arranged at one side of the end of the cantilever beam, and a blazed grating chip is mounted based on a position of the limiting portion.

In an optional embodiment, after the fixing unit is mounted on the top support beam, the collimation unit is mounted onto the fixing unit, and the fixing unit is adjusted to obtain an orientation and/or a position of the collimation unit as specified in design; and after the adjustment is completed, the collimation unit is welded to the fixing unit, wherein the collimation unit and the fixing unit are coated with gold.

In an optional embodiment, one end of a sealing unit is connected with the cantilever beam, while the other end of the sealing unit is connected with the collimation unit, such that a sealing channel is formed between the cantilever beam and the collimation unit; and a housing is arranged outside the displacement measuring apparatus in a covering manner to seal the elements inside the displacement measuring apparatus.

The technical solutions of the present disclosure have the following advantages or beneficial effects:
(1) The displacement measuring apparatus is provided with the support beam, devices such as the cantilever beam, the blazed grating chip and the collimation unit are integrated on the support beam, and the micro-displacement of the to-be-measured object is captured based on an optical measurement principle, and the displacement measuring apparatus can measure the displacement variation at a nanometer level. According to the mounting method of the cantilever beam, the measurement gauge length of a displacement sensor is increased, such that the measurement sensitivity of the displacement measuring apparatus is improved. Additionally, a passive optical fiber displacement measuring unit is employed, such that the displacement measuring apparatus is suitable for various high-intensity magnetic field environments, outdoor severe environments and other special environments, and is suitable for long-term operations.
(2) The left fixing support and the right fixing support are mounted on the surface of the to-be-measured target object by adhesion or welding, such that the mounting stability of the displacement measuring apparatus is improved.
(3) In one embodiment, the blazed grating chip is the MEMS-process-manufactured chip, the plurality of micro-mirrors are arranged on the blazed grating chip, and the light source signal, after passing through the collimation unit, is projected onto the micro-mirrors. Due to the adoption of the MEMS micro-nano manufacturing technology, micro reflecting mirror surfaces are formed on the blazed grating chip, such that the displacement measuring apparatus of the present disclosure can further realize the measurement of micro-angles and also realize the measurement of micro-displacements by the calibration of angles and displacements.
(4) The sensitivity-enhancing structure is arranged at the junction of the left support beam and the left fixing support, and/or the sensitivity-enhancing structure is arranged at the junction of the right support beam and the right fixing support, and/or the sensitivity-enhancing structure is arranged at the junction of the top support beam and the left support beam, and/or the sensitivity-enhancing structure is arranged at the junction of the top support beam and the right support beam. The high sensitivity and high precision performance of the displacement measuring apparatus of the present disclosure are effectively ensured through the arrangement of the sensitivity-enhancing structure.
(5) The arrangement of the detachable protection beam enhances the structural strength of the displacement measuring apparatus, and meanwhile ensures that the measurement accuracy and sensitivity of the displacement measuring apparatus remain unaffected after the protection beam is removed. Moreover, the design of the protection beam effectively ensures that the deformation of the high-sensitivity support beam is avoided during the machining process, such that the displacement measuring apparatus of the present disclosure is easy to manufacture.
(6) A plurality of devices are gold-coated with metals with low-temperature expansion coefficients, thus reducing the deformation of the devices due to temperature changes and ensuring the mounting precision of the devices. Furthermore, gold coating process is also convenient for welding and fixing the devices.

### BRIEF DESCRIPTION OF THE DRAWINGS

The drawings are used to provide a better understanding of the present disclosure and are not to be construed as unduly limiting the present disclosure. Wherein
FIG. 1 is a schematic diagram illustrating an assembly of core components of a displacement measuring apparatus according to an embodiment of the present disclosure;
FIG. 2 is an axonometric view illustrating core components of a displacement measuring apparatus according to an embodiment of the present disclosure;
FIG. 3 is a cross-sectional view illustrating a displacement measuring apparatus according to an embodiment of the present disclosure;
FIG. 4 is an axonometric view illustrating a displacement measuring apparatus according to an embodiment of the present disclosure; and
FIG. 5 is a schematic diagram of an operating principle of a blazed grating chip according to an embodiment of the present disclosure.

### DETAILED DESCRIPTION OF THE EMBODIMENTS

Exemplary embodiments of the present disclosure are described below with reference to the accompanying drawings, and various details of embodiments of the present disclosure are included to assist understanding, which are to be considered as merely exemplary. Accordingly, those ordinarily skill in the art will recognize that various changes and modifications of the embodiments described herein can be made without departing from the scope and spirit of the present disclosure. Also, descriptions of well-known functions and structures are omitted in the following description for clarity and conciseness.

Terms used in the present application are merely used for describing objectives of specific embodiments instead of intending to limit the present application. The singular forms "a/an", "said" and "the" used in the present application and the appended claims are also intended to include plural forms unless otherwise indicated clearly in the context. It should also be understood that the term "and/or" as used herein refers to and encompasses any and all possible combinations of one or more of associated listed items.

It is to be understood that although the terms first, second, third, etc. may be used in the present application to describe various information, such information should not be limited to these terms. These terms are only used to distinguish one type of information from another. For example, first information may also be referred to as second information, and similarly, second information may also be referred to as first information, without departing from the scope of the present application. The word "if" as used herein may be interpreted as "at" or "when" or "in response to determining that", depending on the context.

To solve at least one problem in the background technology, according to a first aspect of embodiments of the present disclosure, a displacement measuring apparatus is provided, which includes a left fixing support, a right fixing support, wherein the left fixing support and the right fixing support are mounted on a surface of a to-be-measured target object; and a support beam arranged between the left fixing support and the right fixing support, the support beam includes a left support beam, a right support beam, and a top support beam arranged between the left support beam and the right support beam; a cantilever beam is arranged on the left support beam, and a blazed grating chip is arranged at one end of the cantilever beam that is away from the left support beam; and a collimation unit is arranged below the top support beam, a light incident side of the collimation unit receives a light source signal, and a light emergent side of the collimation unit is used for outputting the light source signal that is collimated to the blazed grating chip.

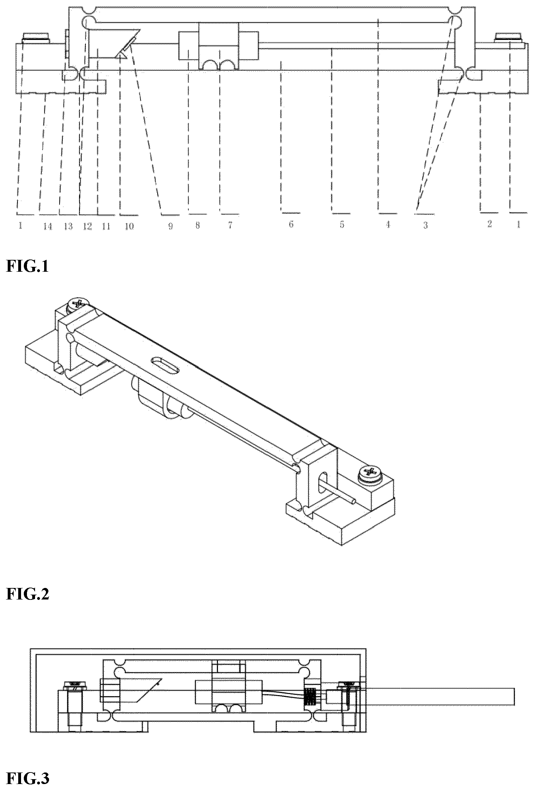

Practically, it is difficult for the conventional displacement measuring means to measure micro-displacements, or to provide satisfactory measurement precision, or to exhibit the suboptimal measurement sensitivity. For this reason, the present disclosure provides a displacement measuring apparatus that employs an optical measurement principle. Illustratively, as shown in FIG. 1, the displacement measuring apparatus includes a left fixing support 14, a right fixing support 2, wherein the left fixing support and the right fixing support are mounted on a surface of a to-be-measured target object. The two fixing supports are not only used for supporting the displacement measuring apparatus, but also serve as fixing mechanisms of the displacement measuring apparatus; and the structural complexity and manufacturing cost of the displacement measuring apparatus are effectively reduced through a reusable structure. Furthermore, the displacement measuring apparatus further includes a support beam arranged between the left fixing support and the right fixing support, wherein the support beam includes a left support beam 12, a right support beam 3, and a top support beam 4 arranged between the left support beam and the right support beam. To facilitate manufacturing, in an embodiment, the support beam is designed in a symmetrical structure, that is, the left support beam and the right support beam are arranged substantially in parallel and are vertically arranged on corresponding supports. As shown in FIG. 1, a cantilever beam 11 is arranged on the left support beam. The cantilever beam may be in a shape of either a cylinder or a cuboid, and the shape of the cantilever beam is not specifically limited here. To facilitate the mounting and fixing of the cantilever beam, in an embodiment, the cantilever beam is fixed to the left support beam by a cross-shaped cantilever beam fixing buckle 13, and the cantilever beam is stably locked by welding. An inclined plane is arranged at an end of the cantilever beam that is away from the left support beam, and a limiting mechanism 10 is arranged on one side of the inclined plane. A blazed grating chip 9 is arranged on the inclined plane at the end of the cantilever beam that is away from the left support beam. Further, a collimation unit is arranged below the top support beam. The collimation unit includes at least one optical lens, and the light entering the collimation unit is collimated and then emitted from the collimation unit in a substantially parallel manner. In an embodiment, a light incident side of the collimation unit (a right side of the collimation unit as shown in FIG. 1) receives a light source signal, and a light emergent side of the collimation unit is used for outputting the light source signal that is collimated to the blazed grating chip. When the to-be-measured target object is displaced or bent, etc., the displacement of the to-be-measured target object will be transmitted to the support beam through at least one of the left fixing support and the right fixing support, thereby, causing the light source signal reflected by the blazed grating chip to get changed. The displacement of the to-be-measured target object can be obtained by collecting and processing the changed light source signal. The specific measurement procedure will be developed below. It should be noted that, owing to the optical measurement means and the blazed grating chip, the displacement measuring apparatus is capable of sensitively measuring the micro-displacement. Furthermore, the cantilever beam increases a measurement gauge length of a displacement sensor, such that the measurement sensitivity of the displacement measuring apparatus is improved.

In an optional embodiment, an optical fiber 5 is connected to the light incident side of the collimation unit, and the light source signal is transmitted into the light incident side of the collimation unit through the optical fiber. Practically, the light source signal of the present disclosure is emitted from a scanning light source. To enable the light source signal to be efficiently transmitted to the blazed grating chip, in an embodiment, light is used as a transmission medium.

In an optional embodiment, the optical fiber is a gold-coated or polyimide-coated optical fiber, and one end of the optical fiber that is away from the collimation unit passes through the right support beam, and a gap between the optical fiber and the right support beam is sealed by welding. In the examples as shown in FIG. 1 and FIG. 2, a through hole through which the optical fiber passes is provided on the right support beam. Since there is a gap between the through hole and the optical fiber, and if the gap is not sealed or filled, the optical fiber may come into contact with the through hole, resulting in wear, or environmental contaminants may penetrate into the displacement measuring apparatus, which, in turn, adversely affects the measurement precision of the displacement measuring apparatus. For this reason, in an embodiment of the present disclosure, a gold-coated optical fiber is used, and then the gap between the optical fiber and the through hole can be sealed by gold-tin solder welding or the like. The gold-coated material may be either metal or alloy, and the alloy may be kovar alloy or the like. Additionally, a gold or polyimide coating on a surface of the optical fiber can improve the high-temperature tolerance of the optical fiber, such that the optical fiber can normally operate at a high temperature environment, thus broadening the application range of the displacement measuring apparatus.

In an optional embodiment, the left fixing support and the right fixing support are mounted on the surface of the to-be-measured target object by adhesion or welding. Compared with a method for fixing a support on a plane, in an embodiment of the present disclosure, fixing supports are fixed to the surface of the to-be-measured object by adhesion or welding, whereby an adhesion or welding contact surface is effectively increased, thus enhancing the firmness of a fixing surface.

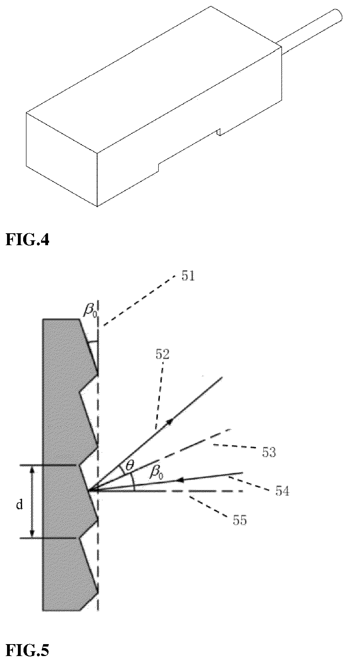

In an optional embodiment, the blazed grating chip is an MEMS (Micro Electro Mechanical System)-process-manufactured chip, and a plurality of micro-mirrors are arranged on the blazed grating chip; and the light source signal, after passing through the collimation unit, is projected onto the micro-mirrors, and after selective reflection of the incident light based on wavelength by the micro-mirrors, the reflected light then re-enters the collimation unit and is collected by a signal receiving module. To obtain good measurement precision and accurately measure micro-displacements, in an embodiment of the present disclosure, an MEMS blazed grating chip is used. The MEMS blazed grating chip (or referred to as an MEMS-process-manufactured blazed grating chip) can be obtained by wet etching of a silicon wafer. A grating is the most effective dispersive spectroscopy device. During the design of a blazed grating for sensor measurements, a spectral resolution is mainly considered. The narrower the output line width, the better,, so as to facilitate the subsequent signal demodulation to obtain higher wavelength resolution and wavelength precision. Additionally, in order to manufacture more MEMS-sensitive chips from one silicon wafer in a single batch, thus reducing the cost per chip, and to achieve miniaturization packaging for a fiber-optic MEMS displacement sensor, the blazed grating needs to be processed on a micro millimeter scale. In an embodiment of the present disclosure, a blazed grating used can achieve measurement precision in the range of several hundred nanometers, is characterized by high response rate, long-distance transmission, and easy reuse, and is suitable for environments with strong electromagnetic interference, corrosive conditions, and the like. Therefore, the displacement measuring apparatus according to the present disclosure can be widely applied to occasions, such as distributed sensing, long-distance transmission of real-time signals, severe environments, limited power supply, etc. Specifically, as shown in FIG. 1 and FIG. 5, a plurality of micro-mirrors are arranged on the MEMS blazed grating chip, and a preset included angle, i.e., a blazing angle β₀, is formed between the micro-mirrors and a grating plane 51. A normal line 55 of a grating surface is perpendicular to the grating plane 51. When the to-be-measured object is bent and displaced, light is irradiated from an incident direction 54to the surface of the micro-mirror, and then the reflected light along a maximum diffraction direction 52 is generated on the other side of a normal line 53 of the surface of the micro-mirror; and a relationship between a bending angle of the to-be-measured target object and a spectral wavelength of the light source signal is as follows:$2 dsin {β}_{0} cosθ = mλ$ Where d is a grating pitch; θ is an included angle between the incident light and the normal line of the surface of the micro-mirror, which is determined by the bending angle of the to-be-measured object; m is a diffraction order; and λ is a diffraction wavelength.

In actual use, the light source signal, after being collimated by the collimation unit, is projected onto the micro-mirrors, and after selective reflection of the incident light based on wavelength by the micro-mirrors, the reflected light then re-enters the collimation unit and is collected by the signal receiving module. The corresponding angle θ can be calculated by analyzing the wavelength of the light selectively reflected by the micro-mirrors, and then the bending angle of the to-be-measured object is obtained. Further, based on calibrating the mapping relation between the angle θ and the displacement of the displacement measuring apparatus, the displacement of the to-be-measured object can be obtained by measuring the angle via the MEMS blazed grating chip. In other words, the embodiment discloses how to obtain the micro-displacement of the to-be-measured object by measuring the angle.

In an optional embodiment, the left support beam is arranged on the left fixing support, the right support beam is arranged on the right fixing support, and a sensitivity-enhancing structure is arranged at a junction of the left support beam and the left fixing support, and/or a sensitivity-enhancing structure is arranged at a junction of the right support beam and the right fixing support. Practically, when the structural strength of the displacement measuring apparatus is high, especially the structural strength of the support beam is high, the displacement measuring apparatus is insensitive to variation in a micro-angle or displacement, resulting in difficulty in capturing subtle changes of the to-be measured object. For this reason, in an embodiment of the present disclosure, a sensitivity-enhancing structure is arranged at at least one position of the support beam to improve measurement sensitivity for the micro-displacement or angle. Specifically, as shown in FIG. 1, the sensitivity-enhancing structure is arranged at the junction of the left support beam and the left fixing support, and/or a sensitivity-enhancing structure is arranged at the junction of the right support beam and the right fixing support. The sensitivity-enhancing structure is arranged to reduce the tensile strength of the support beam, such that the support beam can generate larger displacement or angular deformation in response to the micro-deformation of the to-be-measured object. Illustratively, the sensitivity-enhancing structure may be a semicircular concave structure, which is only an example here and is not limited to the specific design of the sensitivity-enhancing structure.

In an optional embodiment, a sensitivity-enhancing structure is arranged at a junction of the top support beam and the left support beam, and/or a sensitivity-enhancing structure is arranged at a junction of the top support beam and the right support beam. Further, when the sensitivity of the displacement measuring apparatus needs to be further improved, the sensitivity-enhancing structures can be arranged at other positions of the support beam, such as at the junction of the top support beam and the left support beam, and/or at the junction of the top support beam and the right support beam.

In an optional embodiment, a detachable protection beam is further arranged between the left fixing support and the right fixing support, and the detachable protection beam is used for protecting the displacement measuring apparatus against deformation in an assembled state. As described above, after the sensitivity-enhancing structure is arranged on the support beam, the structural strength of the displacement measuring apparatus will be significantly reduced. Of course, the dimensional design or material selection of the support beam itself may also result in the lower structural strength of the support beam. As a result, the displacement measuring apparatus may experience deformation or even damage to the support beam during transportation, usage, or other use. For this reason, in an embodiment, the detachable protection beam 6 is arranged between the left fixing support and the right fixing support. The protection beam 6 can provide support for the support beam to protect the support beam against deformation. After the displacement measuring apparatus is mounted on the surface of the to-be-measured object, the protection beam can be detached. Specifically, when in specific use, the protection beam can be fixed to the fixing supports through elements which are convenient to disassemble and assemble, such as retaining screws 1.

In an optional embodiment, the collimation unit is arranged on the top support beam through a fixing unit, and the fixing unit is used for adjusting an orientation and/or a position of the collimation unit. In an embodiment, in order to accurately collect changes in the transmission of the light source signal caused by the to-be-measured object, the collimation unit is fixed to the top support beam. In an embodiment, a mounting position is set on the top support beam, and then a fixing unit for fixing the collimation unit is assembled to the mounting position. Additionally, the fixing unit can adjust the orientation and/or the position of the collimation unit, such that emergent light of the collimation unit basically keeps parallel to each other. It can be understood that the fixing unit greatly reduces difficulty in mounting and adjusting the collimation unit, such that the displacement measuring apparatus is easy to manufacture.

In an optional embodiment, the collimation unit and the fixing unit are coated with gold, and the collimation unit and the fixing unit are connected by welding. After adjusting an angle and position of the collimation unit, the collimation unit needs to be fixed. When the collimation unit is bonded using a viscous substance having a larger temperature coefficient, such as glue, the fixing angle and position of the collimation unit will be affected directly, leading to failure in obtaining a desired orientation and position of mounting. For this reason, in an embodiment of the present disclosure, the fixing unit 7 and the collimation unit 8 are coated with gold before being fixed by welding. The gold-coated material may be either metal or alloy, and the alloy may be kovar alloy or the like.

In an optional embodiment, a limiting portion 10 is arranged at one side of the end of the cantilever beam, and the limiting portion is used for positioning a mounting position of the blazed grating chip. When the blazed grating chip is mounted, a distance range is required between an edge of the blazed grating chip 9 and an edge of the limiting portion 10 as a reference of the chip mounting position.

In an optional embodiment, the displacement measuring apparatus further includes a sealing unit, one end of the sealing unit is connected with the cantilever beam, while the other end of the sealing unit is connected with the collimation unit, such that a sealing channel is formed between the cantilever beam and the collimation unit. In an embodiment, a sealing unit is arranged between the cantilever beam and the collimation unit to prevent the contamination of a chip surface and a surface of the collimation unit, which may adversely affect the measurement precision. The sealing unit may be a corrugated pipe having enough flexibility, which can change along with changes in the displacement or angle of the to-be-measured object, thus reducing the influence on the deformation of the support beam, and ensuring the measurement sensitivity and measurement precision of the displacement measuring apparatus.

In an optional embodiment, a housing is arranged outside the displacement measuring apparatus, and the housing seals elements inside the displacement measuring apparatus. In an embodiment, as shown in FIG. 3 and FIG. 4, the displacement measuring apparatus is encapsulated by the external housing to protect the elements therein.

According to a second aspect of embodiments of the present disclosure, a manufacturing method of the displacement measuring apparatus according to the first aspect is provided. The method includes the following steps that a support beam is fixed between a left fixing support and a right fixing support; two ends of a protection beam are detachably connected to the left fixing support and the right fixing support respectively through fixing elements.

During the actual manufacturing process, parts such as the support beam, a cantilever beam, a fixing unit, the left fixing support, and the right fixing support can be processed first according to the design requirements of a drawing, and then assembled and debugged. In order to facilitate mass production and assembly on a production line, a frame structure of the displacement measuring apparatus can be manufactured and assembled first, for example, the support beam and the protection beam are respectively fixed between the left fixing support and the right fixing support.

In an optional embodiment, a sensitivity-enhancing structure is processed at a junction of a left support beam and the left fixing support, and/or a sensitivity-enhancing structure is processed at a junction of a right support beam and the right fixing support, and/or a sensitivity-enhancing structure is processed at a junction of a top support beam and the left support beam, and/or a sensitivity-enhancing structure is processed at a junction of the top support beam and the right support beam. Due to the support beam is relatively thin, the direct machining of the sensitivity-enhancing structure on the support beam will cause deformation of the support beam, thereby adversely affecting the processing precision. Therefore, before the sensitivity-enhancing structure is processed, the protection beam needs to be mounted to enhance the strength of the support beam; and then the sensitivity-enhancing structure is processed.

In an optional embodiment, the cantilever beam is mounted on the left support beam, a limiting portion is arranged at one side of the end of the cantilever beam, and a blazed grating chip is mounted based on a position of the limiting portion.

In an optional embodiment, after the fixing unit is mounted on the top support beam, a collimation unit is mounted onto the fixing unit, and the fixing unit is adjusted to obtain an orientation and/or a position of the collimation unit as specified in design; and
After the adjustment is completed, the collimation unit is welded to the fixing unit, wherein the collimation unit and the fixing unit are coated with gold.

In an optional embodiment, one end of a sealing unit is connected with the cantilever beam, while the other end of the sealing unit is connected with the collimation unit, such that a sealing channel is formed between the cantilever beam and the collimation unit; and a housing is arranged outside the displacement measuring apparatus in a covering manner to seal elements inside the displacement measuring apparatus.

## Claims

1. A displacement measuring apparatus, comprising: a left fixing support, a right fixing support, wherein the left fixing support and the right fixing support are mounted on a surface of a to-be-measured target object; and a support beam arranged between the left fixing support and the right fixing support;
**characterized in that**
the support beam comprises a left support beam, a right support beam, and a top support beam arranged between the left support beam and the right support beam;
a cantilever beam is arranged on the left support beam, and a blazed grating chip is arranged at an end of the cantilever beam that is away from the left support beam; and
a collimation unit is arranged below the top support beam, a light incident side of the collimation unit receives a light source signal, and a light emergent side of the collimation unit is used for outputting the collimated light source signal to the blazed grating chip.

2. The displacement measuring apparatus according to claim 1, **characterized in that**
an optical fiber is connected to the light incident side of the collimation unit, and the light source signal is input into the light incident side of the collimation unit through the optical fiber.

3. The displacement measuring apparatus according to claim 2, **characterized in that**
the optical fiber is a gold- coated or polyimide-coated optical fiber, one end of the optical fiber that is away from the collimation unit passes through the right support beam, and a gap between the optical fiber and the right support beam is sealed by welding.

4. The displacement measuring apparatus according to claim 1, **characterized in that**
the left fixing support and the right fixing support are mounted on the surface of the to-be-measured target object by adhesion or welding.

5. The displacement measuring apparatus according to claim 1, **characterized in that**
the blazed grating chip is an MEMS (Micro Electro Mechanical System)-process-manufactured chip, and a plurality of micro-mirrors are arranged on the blazed grating chip; and the light source signal, after passing through the collimation unit, is projected onto the micro-mirrors, and after selective reflection of the incident light based on wavelength by the micro-mirrors, and the reflected light then re-enters the collimation unit and is collected by a signal receiving module.

6. The displacement measuring apparatus according to claim 1, **characterized in that**
the left support beam is arranged on the left fixing support, the right support beam is arranged on the right fixing support, and a sensitivity-enhancing structure is arranged at a junction of the left support beam and the left fixing support, and/or a sensitivity-enhancing structure is arranged at a junction of the right support beam and the right fixing support, and/or a sensitivity-enhancing structure is arranged at a junction of the top support beam and the left support beam, and/or a sensitivity-enhancing structure is arranged at a junction of the top support beam and the right support beam.

7. The displacement measuring apparatus according to claim 1, **characterized in that**
a detachable protection beam is further arranged between the left fixing support and the right fixing support, and the detachable protection beam is used for protecting the displacement measuring apparatus against deformation in an assembled state.

8. The displacement measuring apparatus according to claim 1, **characterized in that**
the collimation unit is arranged on the top support beam by a fixing unit, and the fixing unit is used for adjusting an orientation and/or a position of the collimation unit; and/or the collimation unit and the fixing unit are coated with gold, and the collimation unit and the fixing unit are connected by welding.

9. The displacement measuring apparatus according to claim 1, **characterized in that**
a limiting portion is arranged at one side of the end of the cantilever beam, and the limiting portion is used for positioning a mounting position of the blazed grating chip.

10. The displacement measuring apparatus according to claim 1, **characterized in that**
the displacement measuring apparatus further comprises a sealing unit, one end of the sealing unit is connected with the cantilever beam, while the other end of the sealing unit is connected with the collimation unit, such that a sealing channel is formed between the cantilever beam and the collimation unit.

11. The displacement measuring apparatus according to claim 1, **characterized in that**
A housing is arranged outside the displacement measuring apparatus, and the housing is used for sealing elements inside the displacement measuring apparatus.

12. A manufacturing method of the displacement measuring apparatus as claimed in any one of claims 1-11, **characterized in that**
a support beam is fixed between a left fixing support and a right fixing support; and
two ends of a protection beam are detachably connected to the left fixing support and the right fixing support respectively through fixing elements.

13. The manufacturing method according to claim 12, **characterized in that**
a sensitivity-enhancing structure is processed at a junction of a left support beam and the left fixing support, and/or a sensitivity-enhancing structure is processed at a junction of a right support beam and the right fixing support, and/or a sensitivity-enhancing structure is processed at a junction of a top support beam and the left support beam, and/or a sensitivity-enhancing structure is processed at a junction of the top support beam and the right support beam.

14. The manufacturing method according to claim 13, **characterized in that**
a cantilever beam is mounted on the left support beam, a limiting portion is arranged at one side of the end of the cantilever beam, and a blazed grating chip is mounted based on a position of the limiting portion.

15. The manufacturing method according to claim 14, **characterized in that**
after a fixing unit is mounted on the top support beam, a collimation unit is mounted onto the fixing unit, and the fixing unit is adjusted to obtain an orientation and/or a position of the collimation unit as specified in design; and
after the adjustment is completed, the collimation unit is welded to the fixing unit, wherein the collimation unit and the fixing unit are coated with gold.

16. The manufacturing method according to claim 15, **characterized in that**
one end of a sealing unit is connected with the cantilever beam, while the other end of the sealing unit is connected with the collimation unit, such that a sealing channel is formed between the cantilever beam and the collimation unit; and a housing is arranged outside the displacement measuring apparatus in a covering manner to seal elements inside the displacement measuring apparatus.

## Patentansprüche

1. Wegmessvorrichtung, umfassend:
eine linke Befestigungsstütze und eine rechte Befestigungsstütze, wobei die linke Befestigungsstütze und die rechte Befestigungsstütze auf einer Oberfläche eines zu messenden Zielobjekts montiert sind; und
einen Trägerbalken, der zwischen der linken Befestigungsstütze und der rechten Befestigungsstütze angeordnet ist;
**dadurch gekennzeichnet, dass**
der Trägerbalken einen linken Teilbalken, einen rechten Teilbalken sowie einen zwischen dem linken Teilbalken und dem rechten Teilbalken angeordneten Obergurtbalken umfasst;
wobei auf dem linken Teilbalken ein Auslegerbalken angeordnet ist, wobei an einem Ende des Auslegerbalkens, das von dem linken Teilbalken entfernt ist, ein Blazegitter-Chip angeordnet ist;
wobei unterhalb des Obergurtbalkens eine Kollimationseinheit angeordnet ist, wobei eine Lichteintrittsseite der Kollimationseinheit ein Lichtquellensignal empfängt, und eine Lichtaustrittsseite der Kollimationseinheit dazu dient, das kollimierte Lichtquellensignal an den Blazegitter-Chip auszugeben.

2. Wegmessvorrichtung nach Anspruch 1, **dadurch gekennzeichnet, dass**
an die Lichteintrittsseite der Kollimationseinheit eine Lichtleitfaser angeschlossen ist, wobei das Lichtquellensignal über die Lichtleitfaser in die Lichteintrittsseite der Kollimationseinheit eingespeist wird.

3. Wegmessvorrichtung nach Anspruch 2, **dadurch gekennzeichnet, dass**
die Lichtleitfaser eine vergoldete oder mit Polyimid beschichtete Lichtleitfaser ist, wobei ein Ende der Lichtleitfaser, das von der Kollimationseinheit entfernt ist, den rechten Teilbalken durchdringt, und ein Spalt zwischen der Lichtleitfaser und dem rechten Teilbalken durch Schweißen abgedichtet ist.

4. Wegmessvorrichtung nach Anspruch 1, **dadurch gekennzeichnet, dass**
die linke Befestigungsstütze und die rechte Befestigungsstütze durch Kleben oder Schweißen auf der Oberfläche des zu messenden Zielobjekts montiert sind.

5. Wegmessvorrichtung nach Anspruch 1, **dadurch gekennzeichnet, dass**
der Blazegitter-Chip ein nach dem MEMS-Verfahren hergestellter Chip ist, wobei auf dem Blazegitter-Chip mehrere Mikrospiegel angeordnet sind; und das die Kollimationseinheit durchlaufende Lichtquellensignal auf die Mikrospiegel gestrahlt wird, und nach einer wellenlängenselektiven Reflexion des einfallenden Lichts durch die Mikrospiegel das Licht in die Kollimationseinheit eintritt und von einem Signalempfangsmodul erfasst wird.

6. Wegmessvorrichtung nach Anspruch 1, **dadurch gekennzeichnet, dass**
der linke Teilbalken auf der linken Befestigungsstütze angeordnet ist, und der rechte Teilbalken auf der rechten Befestigungsstütze angeordnet ist, wobei an einer Verbindungsstelle zwischen dem linken Teilbalken und der linken Befestigungsstütze eine empfindlichkeitserhöhende Struktur angeordnet ist, und/oder an einer Verbindungsstelle zwischen dem rechten Teilbalken und der rechten Befestigungsstütze eine empfindlichkeitserhöhende Struktur angeordnet ist; und/oder an einer Verbindungsstelle zwischen dem Obergurtbalken und dem linken Teilbalken eine empfindlichkeitserhöhende Struktur angeordnet ist, und/oder an einer Verbindungsstelle zwischen dem Obergurtbalken und dem rechten Teilbalken eine empfindlichkeitserhöhende Struktur angeordnet ist.

7. Wegmessvorrichtung nach Anspruch 1, **dadurch gekennzeichnet, dass**
zwischen der linken Befestigungsstütze und der rechten Befestigungsstütze ferner ein abnehmbarer Schutzbalken angeordnet ist, wobei der abnehmbare Schutzbalken im montierten Zustand dazu dient, eine Verformung der Wegmessvorrichtung zu verhindern.

8. Wegmessvorrichtung nach Anspruch 1, **dadurch gekennzeichnet, dass**
die Kollimationseinheit über eine Befestigungseinheit auf dem Obergurtbalken angeordnet ist, wobei die Befestigungseinheit dazu dient, eine Ausrichtung und/oder eine Position der Kollimationseinheit einzustellen; und/oder die Kollimationseinheit und die Befestigungseinheit vergoldet sind, und die Kollimationseinheit und die Befestigungseinheit durch Schweißen miteinander verbunden sind.

9. Wegmessvorrichtung nach Anspruch 1, **dadurch gekennzeichnet, dass**
an einer Seite des Endes des Auslegerbalkens ein Anschlagabschnitt angeordnet ist, wobei der Anschlagabschnitt dazu dient, eine Montageposition des Blazegitter-Chips zu positionieren.

10. Wegmessvorrichtung nach Anspruch 1, **dadurch gekennzeichnet, dass**
die Wegmessvorrichtung ferner eine Dichtungseinheit umfasst, wobei ein Ende der Dichtungseinheit mit dem Auslegerbalken verbunden ist, und das andere Ende der Dichtungseinheit mit der Kollimationseinheit verbunden ist, um einen Dichtungskanal zwischen dem Auslegerbalken und der Kollimationseinheit zu bilden.

11. Wegmessvorrichtung nach Anspruch 1, **dadurch gekennzeichnet, dass**
an einer Außenseite der Wegmessvorrichtung ein Gehäuse angeordnet ist, wobei das Gehäuse die in der Wegmessvorrichtung befindlichen Bauteile abdichtet.

12. Herstellungsverfahren für eine Wegmessvorrichtung nach einem der Ansprüche 1 bis 11, **dadurch gekennzeichnet, dass**
der Trägerbalken zwischen der linken Befestigungsstütze und der rechten Befestigungsstütze befestigt wird;
die beiden Enden des Schutzbalkens jeweils mit der linken Befestigungsstütze und der rechten Befestigungsstütze mittels Befestigungselementen lösbar verbunden werden.

13. Herstellungsverfahren nach Anspruch 12, **dadurch gekennzeichnet, dass**
an einer Verbindungsstelle zwischen dem linken Teilbalken und der linken Befestigungsstütze eine empfindlichkeitserhöhende Struktur bearbeitet wird, und/oder an einer Verbindungsstelle zwischen dem rechten Teilbalken und der rechten Befestigungsstütze eine empfindlichkeitserhöhende Struktur bearbeitet wird, und/oder an einer Verbindungsstelle zwischen dem Obergurtbalken und dem linken Teilbalken eine empfindlichkeitserhöhende Struktur bearbeitet wird, und/oder an einer Verbindungsstelle zwischen dem Obergurtbalken und dem rechten Teilbalken eine empfindlichkeitserhöhende Struktur bearbeitet wird.

14. Herstellungsverfahren nach Anspruch 13, **dadurch gekennzeichnet, dass**
an dem linken Teilbalken ein Auslegerbalken montiert wird, wobei an einer Seite des Endes des Auslegerbalkens ein Anschlagabschnitt angeordnet wird, und der Blazegitter-Chip entsprechend einer Position des Anschlagabschnitts montiert wird.

15. Herstellungsverfahren nach Anspruch 14, **dadurch gekennzeichnet, dass**
nachdem die Befestigungseinheit auf dem Obergurtbalken montiert ist, die Kollimationseinheit auf der Befestigungseinheit montiert wird, und die Befestigungseinheit eingestellt wird, um eine konstruktiv erforderliche Ausrichtung und/oder Position der Kollimationseinheit zu erhalten;
nach Abschluss der Einstellung die Kollimationseinheit an die Befestigungseinheit geschweißt wird, wobei die Kollimationseinheit und die Befestigungseinheit vergoldet sind.

16. Herstellungsverfahren nach Anspruch 15, **dadurch gekennzeichnet, dass**
ein Ende der Dichtungseinheit mit dem Auslegerbalken verbunden wird, und das andere Ende der Dichtungseinheit mit der Kollimationseinheit verbunden wird, um einen Dichtungskanal zwischen dem Auslegerbalken und der Kollimationseinheit zu bilden; und auf der Außenseite der Wegmessvorrichtung ein Gehäuse übergestülpt wird, um die in der Wegmessvorrichtung befindlichen Bauteile abzudichten.

## Revendications

1. Dispositif de mesure de déplacement, comprenant : un support fixe gauche et un support fixe droit, lesdits support fixe gauche et support fixe droit étant montés sur la surface d'un objet cible à mesurer ; ainsi qu'une poutre de support disposée entre le support fixe gauche et le support fixe droit ;
**caractérisé en ce que** :
ladite poutre de support comprend une poutre de support gauche, une poutre de support droite et une poutre de support supérieure disposée entre la poutre de support gauche et la poutre de support droite ;
ladite poutre de support gauche est pourvue d'une poutre en porte-à-faux, une extrémité de ladite poutre en porte-à-faux éloignée de la poutre de support gauche étant équipée d'une puce à réseau de diffraction échelette ;
une unité de collimation est disposée sous la poutre de support supérieure, le côté d'entrée de lumière de ladite unité de collimation recevant un signal de source lumineuse, le côté de sortie de lumière de ladite unité de collimation étant conçu pour délivrer le signal lumineux collimaté vers ladite puce à réseau de diffraction échelette.

2. Dispositif de mesure de déplacement selon la revendication 1, **caractérisé en ce que**
le côté d'entrée de lumière de l'unité de collimation est relié à une fibre optique, ledit signal de source lumineuse étant introduit dans le côté d'entrée de lumière de l'unité de collimation par l'intermédiaire de ladite fibre optique.

3. Dispositif de mesure de déplacement selon la revendication 2, **caractérisé en ce que**
ladite fibre optique est une fibre optique revêtue d'or ou de polyimide, ladite fibre optique, à l'extrémité éloignée de l'unité de collimation, traverse la poutre de support fixe droit, l'espace entre ladite fibre optique et le support fixe droit étant obturé de manière étanche par soudage.

4. Dispositif de mesure de déplacement selon la revendication 1, **caractérisé en ce que**
lesdits support fixe gauche et support fixe droit sont montés sur la surface de l'objet cible par collage ou soudage.

5. Dispositif de mesure de déplacement selon la revendication 1, **caractérisé en ce que**
ladite puce à réseau de diffraction échelette est une puce fabriquée par un procédé MEMS, sur laquelle sont disposés plusieurs micromiroirs, le signal lumineux collimaté par l'unité de collimation éclaire lesdits micromiroirs, et après réflexion sélective en longueur d'onde de la lumière incidente par lesdits micromiroirs, est renvoyé dans l'unité de collimation et acquis par un module de réception de signal.

6. Dispositif de mesure de déplacement selon la revendication 1, **caractérisé en ce que**
la poutre de support gauche est disposée sur ledit support fixe gauche, la poutre de support droite est disposée sur ledit support fixe droit, une structure de sensibilisation est prévue au niveau de la liaison entre la poutre de support gauche et le support fixe gauche, et/ou une structure de sensibilisation est prévue au niveau de la liaison entre la poutre de support droite et le support fixe droit ; et/ou, une structure de sensibilisation est prévue au niveau de la liaison entre ladite poutre de support supérieure et la poutre de support gauche, et/ou une structure de sensibilisation est prévue au niveau de la liaison entre ladite poutre de support supérieure et la poutre de support droite.

7. Dispositif de mesure de déplacement selon la revendication 1, **caractérisé en ce qu'**il
comprend en outre une poutre de protection amovible disposée entre ledit support fixe gauche et ledit support fixe droit, ladite poutre de protection, à l'état assemblé, étant destinée à empêcher la déformation du dispositif de mesure de déplacement.

8. Dispositif de mesure de déplacement selon la revendication 1, **caractérisé en ce que**
ladite unité de collimation est disposée sur la poutre de support supérieure par l'intermédiaire d'une unité de fixation, ladite unité de fixation étant conçue pour régler l'orientation et/ou la position de l'unité de collimation ; et/ou, ladite unité de collimation et ladite unité de fixation sont revêtues d'or et sont reliées entre elles par soudage.

9. Dispositif de mesure de déplacement selon la revendication 1, **caractérisé en ce qu'**une
butée est disposée sur un côté de l'extrémité de ladite poutre en porte-à-faux, ladite butée étant destinée à positionner la puce à réseau de diffraction échelette lors de son montage.

10. Dispositif de mesure de déplacement selon la revendication 1, **caractérisé en ce qu'**il
comprend en outre une unité d'étanchéité, ladite unité d'étanchéité étant raccordée d'une part à ladite poutre en porte-à-faux et d'autre part à ladite unité de collimation, de manière à former un canal étanche entre la poutre en porte-à-faux et l'unité de collimation.

11. Dispositif de mesure de déplacement selon la revendication 1, **caractérisé en ce qu'**un
boîtier est disposé à l'extérieur dudit dispositif de mesure de déplacement, ledit boîtier assurant l'étanchéité des composants internes du dispositif de mesure de déplacement.

12. Procédé de fabrication d'un dispositif de mesure de déplacement selon l'une quelconque des revendications 1 à 11, **caractérisé en ce qu'**il comprend les étapes suivantes :
fixer ladite poutre de support entre le support fixe gauche et le support fixe droit ;
fixer de manière amovible, par l'intermédiaire d'éléments de fixation, les deux extrémités d'une poutre de protection respectivement au support fixe gauche et au support fixe droit.

13. Procédé de fabrication selon la revendication 12, **caractérisé en ce qu'**il
comprend en outre les étapes suivantes : usiner une structure de sensibilisation au niveau de la liaison entre la poutre de support gauche et le support fixe gauche, et/ou usiner une structure de sensibilisation au niveau de la liaison entre la poutre de support droite et le support fixe droit, et/ou usiner une structure de sensibilisation au niveau de la liaison entre la poutre de support supérieure et la poutre de support gauche, et/ou usiner une structure de sensibilisation au niveau de la liaison entre la poutre de support supérieure et la poutre de support droite.

14. Procédé de fabrication selon la revendication 13, **caractérisé en ce qu'**il
comprend en outre les étapes suivantes : monter la poutre en porte-à-faux sur la poutre de support gauche, une butée étant disposée d'un côté de l'extrémité de ladite poutre en porte-à-faux, et monter la puce à réseau de diffraction échelette en fonction de la position de ladite butée.

15. Procédé de fabrication selon la revendication 14, **caractérisé en ce qu'**il
comprend en outre les étapes suivantes : après avoir monté l'unité de fixation sur la poutre de support supérieure, monter l'unité de collimation sur l'unité de fixation, et régler l'unité de fixation pour obtenir l'orientation et/ou la position souhaitées de l'unité de collimation ;
après réglage, souder l'unité de collimation sur l'unité de fixation, l'unité de collimation et l'unité de fixation étant revêtues d'or.

16. Procédé de fabrication selon la revendication 15, **caractérisé en ce qu'**il
comprend en outre les étapes suivantes : raccorder l'unité d'étanchéité d'une part à ladite poutre en porte-à-faux et d'autre part à ladite unité de collimation, de manière à former un canal étanche entre la poutre en porte-à-faux et l'unité de collimation ; et placer un boîtier autour du dispositif de mesure de déplacement pour assurer l'étanchéité des composants internes du dispositif de mesure de déplacement.
